# EUROPÄISCHE PATENTANMELDUNG

(11) **EP 4 303 697 A1**
(43) Veröffentlichungstag der Anmeldung: **10.01.2024**
(21) Anmeldenummer: 22183128.2
(22) Anmeldetag: 05.07.2022
(51) Int. Cl.: G06F 3/01

(54) **VIRTUELL AKTIVIERTE INTERAKTION EINES NUTZERS MIT EINEM PHYSISCHEN OBJEKT**

(71) Anmelder: Deutsche Telekom AG, 53113 Bonn (DE)
(72) Erfinder: SPEICH, Jan, 53757 Sankt Augustin (DE); von ASCHWEGE, Sven, 53225 Bonn (DE); SCHRAGE, Elmar, 53347 Alfter (DE)
(74) Vertreter: Nern, Peter-Michael

(57) **Zusammenfassung**

Die Erfindung betrifft eine Lösung zur Interaktion eines Nutzers (10) mit mindestens einem physischen Objekt (1₁, 1₂, 2) mithilfe einer durch ein mobiles computerbasiertes Endgerät (6) verarbeiteten Programmanwendung und eines durch diese Programmanwendung an den Brillengläsern einer von dem Nutzer (10) getragenen MR-Brille (5) visualisierbaren virtuellen Trigger-Objektes (3₁, 3₂, 4). Die Interaktion erfolgt durch Ausrichten der Blickrichtung oder eines an den Brillengläsern der MR-Brille (5) visualisierten virtuellen Laserpointers (9) auf das hierdurch aktivierte, zuvor in einem Setup-Modus der Programmanwendung mit dem mindestens einen physischen Objekt (1₁, 1₂, 2) verknüpfte Trigger-Objekt (3₁, 3₂, 4) . Danach wird eine dem aktivierten Trigger-Objekt (3₁, 3₂, 4) unterlegte Interaktionsfunktion unmittelbar oder in Reaktion auf eine Geste des Nutzers (10) oder nach Auswahl aus einer Liste mehrerer dem Trigger-Objekt (3₁, 3₂, 4) unterlegter Interaktionsfunktionen ausgeführt. Im letztgenannten Fall erfolgt die Auswahl der Interaktionsfunktion durch Ausrichten der Blickrichtung oder des virtuellen Laserpointers (9) auf den entsprechenden Listeneintrag oder durch eine Geste.

## Beschreibung

Die Erfindung betrifft eine Lösung zur virtuell aktivierten Interaktion eines Nutzers mit einem von ihm in seiner Umgebung visuell wahrnehmbaren physischen, also realen Objekt. Die Interaktion erfolgt hierbei mithilfe einer durch ein mobiles computerbasiertes Endgerät des Nutzers verarbeiteten Programmanwendung, durch welche die Interaktion mit dem realen physischen Objekt durch Aktivieren eines diesem physischen Objekt zugeordneten (das heißt mit ihm verknüpften), mit wenigstens einer Interaktionsfunktion unterlegten virtuellen Trigger-Objekts ermöglicht wird. Das vorgenannte virtuelle Trigger-Objekt wird dazu dem Nutzer an den Brillengläsern einer von ihm getragenen MR-Brille, nämlich einer eine gemischte Realität (Mixed Reality) vermittelnden elektronischen Brille, visualisiert. Gegenstände der Erfindung sind ein entsprechendes Verfahren und ein zur Durchführung dieses Verfahrens geeignetes System.

Techniken zur Nutzung einer erweiterten Realität mithilfe dafür ausgebildeter elektronischer Brillen finden eine zunehmende Verbreitung. Entsprechende elektronische Brillen vermitteln hierbei ihrem Nutzer je nach Ausbildung und Anwendungsfall entweder eine so tatsächlich nicht vorhandene, also gewissermaßen simulierte Realität (VR = Virtual Reality) oder eine erweiterte Realität (AR = Augmented Reality), bei welcher der Nutzer über die von ihm getragene Brille einerseits die ihn tatsächlich, also physisch umgebende Realität und andererseits eine diese ergänzende virtuelle Realität wahrnimmt. Soweit dabei eine Interaktion zwischen den an den Brillengläsern der Brille ausgebebenen virtuellen Inhalten und der außerdem durch die Brille wahrgenommenen tatsächlichen Realität möglich ist, spricht man auch von einer gemischten Realität (MR = Mixed Reality). Letzterem bedient sich auch die hier vorgestellte Lösung.

Da auch im Zusammenhang mit VR und AR von einer Realität (Virtual Reality beziehungsweise Augmented Reality) gesprochen wird, ist die Bezeichnung eines Objektes als reales Objekt im Grunde eher ungeeignet, um hierdurch tatsächlich vorhandene Objekte von anderen (nämlich virtuellen) Objekten zu unterscheiden, welche für den Träger einer elektronischer Brille einer der vorgenannten Arten über deren Brillengläser ebenfalls wahrnehmbar sind. Tatsächlich vorhandene, den Nutzer umgebende, das heißt, nicht nur virtuell, mittels eines Computers erzeugte sowie visualisierte Objekte, werden daher in den weiteren Erläuterungen und in den Patentansprüchen durchgängig als physische Objekte bezeichnet.

Die zuvor angesprochenen Techniken werden beispielsweise in der Wissenschaft oder in der Wirtschaft, zum Beispiel in den Bereichen der Entwicklung und Konstruktion, oder auch im Zusammenhang mit Computerspielen bereits in größerem Umfang genutzt. Sie ermöglichen es, einem Nutzer unter anderem an einem technischen Objekt auch Merkmale optisch zu erfassen, die so in ihrer tatsächlichen Ausprägung nicht wahrnehmbar sind, weil sie beispielsweise durch andere Objekte oder durch Flächen desselben Objekts verdeckt sind. Darüber hinaus ermöglichen es diese Techniken, nämlich insbesondere Techniken, die sich des schon genannten Prinzips der Mixed Reality bedienen, einem Nutzer vermittels virtueller, also so tatsächlich nicht vorhandener Objekte (Trigger-Objekte) mit ihn umgebenden, tatsächlich vorhandenen physischen Objekten zu interagieren.

Ein Einsatzgebiet für Letzteres können aber beispielsweise auch Smart Home Umgebungen (oder ebenso Smart Office Umgebungen) sein. In einer solchen Umgebung kann es dem Nutzer ermöglicht werden, eine MR-Brille gewissermaßen als eine Art universelle Fernbedienung zur Steuerung von Funktionen in die Smart Home Umgebung einbezogener technischer Geräte - bei denen es sich um eine mögliche Ausprägungsform physischer Objekte handelt - zu nutzen. Hierbei tritt der Nutzer mithilfe der MR-Brille und mithilfe durch diese visualisierter virtueller Objekte (Trigger-Objekte) mit diesen Geräten in Interaktion. An dieser Stelle sei jedoch bereits darauf hinwiesen, dass nach dem der hier vorgestellten Lösung zugrunde liegenden Verständnis eine Interaktion mit einem physischen Objekt nicht zwingend gleichzusetzen ist mit der Steuerung von Funktionen hierfür entsprechend ausgebildeter physischer Objekte (elektronische Geräte, Einrichtungen und dergleichen). Vielmehr kann eine solche Interaktion auch mit passiven, also selbst nicht funktional steuerbaren physischen Objekten erfolgen, indem beispielsweise bei einer insoweit im Grunde nur mit dem betreffenden Objekt verknüpften Interaktion mit diesem Objekt assoziierte Informationen ausgegeben werden.

Bisher, insbesondere im Bereich von Smart Home oder Smart Office, bekannt gewordenen Konzepte verfolgen hierbei einen Ansatz, bei welchem die Funktionsweise gebräuchlicher physischer Universalfernbedienungen weitgehend auf die virtuelle Ebene übertragen wird, wie sie mithilfe einer VR-Brille oder einer MR-Brille vermittelt wird. Das heißt, für den Nutzer wird eine mit einer physischen Universalfernbedienung vergleichbare virtuelle Fernbedienung an den Brillengläsern der MR-Brille visualisiert.

Wie bei einer physischen Universalfernbedienung auch muss der Nutzer zunächst an der virtuellen Fernbedienung ein elektronisches Gerät, welches er steuern will, respektive ein physisches Objekt, mit dem er in Interaktion treten will, an der virtuellen Fernbedienung auswählen. Erst danach kann er eine für dieses physische Objekt hinterlegte Interaktionsfunktion ausführen. Bei einer in der WO 2021/230975 A1 offenbarten Lösung geben sich dabei die physischen Objekte, mit welchen eine Interaktion unter Nutzung einer VR- oder MR-Brille möglich ist, gegenüber der entsprechenden elektronischen Brille durch das Aussenden hierauf aufmerksam machender Funk-Beacons zu erkennen. Jedoch entspricht eine Interaktion mit einem von mehreren physischen Objekten mithilfe virtueller Techniken, bei denen das betreffende Gerät zunächst aus einer Art Menü auszuwählen ist, im Grunde nicht einer natürlichen, intuitiven Vorgehensweise.

Aufgabe der Erfindung ist es, eine alternative Lösung für eine virtuell aktivierte Interaktion eines Nutzers mit einem physischen Objekt zur Verfügung zu stellen, welche eine möglichst intuitive Handhabung vermittelt. Hierfür sollen ein entsprechendes Verfahren angegeben und ein zu dessen Durchführung geeignetes System beschrieben werden.

Die Aufgabe wird durch ein Verfahren mit den Merkmalen des Patentanspruchs 1 charakterisiert. Ein die Aufgabe lösendes, zur Durchführung des Verfahrens geeignetes System wird durch den ersten, das heißt unabhängigen Sachanspruch charakterisiert. Vorteilhafte Aus- und Weiterbildungen der Erfindung sind durch die jeweiligen Unteransprüche gegeben.

Nach dem zur Lösung der Aufgabe vorgeschlagenen Verfahren wird einem Nutzer eine Interaktion mit einem von ihm in seiner Umgebung visuell wahrnehmbaren physischen Objekt mithilfe einer durch ein mobiles computerbasiertes Endgerät des Nutzers verarbeiteten Programmanwendung durch Aktivieren eines dem physischen Objekt innerhalb eines das mobile Endgerät umfassenden Systems zugeordneten, das heißt mit ihm verknüpften Trigger-Objekts ermöglicht. Hierfür kann der Nutzer in einem Anwendungsmodus dieser Programmanwendung das dem physischen Objekt in einem Setup-Modus dieser Programmanwendung zugeordnete, mit wenigstens einer Interaktionsfunktion unterlegte, dem Nutzer an den Brillengläsern einer von ihm getragenen MR-Brille zumindest im Setup-Modus der Programmanwendung visualisierte virtuelle Trigger-Objekt aktivieren. Zur Einordnung der Kategorien MR-Brille, mobiles computerbasiertes Endgerät und System, welches das computerbasierte Endgerät umfasst, sowie zum Verhältnis dieser Kategorien untereinander, respektive zu deren Zusammenwirken, sollen nähere Ausführungen im Zusammenhang mit der Beschreibung des die Aufgabe lösenden Systems erfolgen.

Entsprechend dem zur Lösung der Aufgabe vorgeschlagenen Verfahren wird das dem physischen Objekt zugeordnete Trigger-Objekt durch Ausrichten der Blickrichtung des die MR-Brille tragenden Nutzers oder eines an den Brillengläsern der MR-Brille visualisierten virtuellen Laserpointers auf das Trigger-Objekt aktiviert. Daraufhin wird mindestens einer der nachfolgenden Verfahrensschritte ausgeführt, nämlich:
a) eine dem aktivierten Trigger-Objekt für das physische Objekt unterlegte Interaktionsfunktion unmittelbar ausgeführt,
b) eine dem aktvierten Trigger-Objekt für das physische Objekt unterlegte Interaktionsfunktion in Reaktion auf eine von der MR-Brille erfasste sowie von der Programmanwendung interpretierte Geste des Nutzers ausgeführt,
c) an den Brillengläsern der MR-Brille eine Liste mehrerer, dem aktivierten Trigger-Objekt für das physische Objekt hinterlegter Interaktionsfunktionen visualisiert, von denen eine vom Nutzer durch Ausrichten seiner Blickrichtung oder des virtuellen Laserpointers auf den entsprechenden Listeneintrag oder durch eine von der MR-Brille erfasste sowie von der Programmanwendung interpretierte Geste des Nutzers ausgewählte Interaktionsfunktion ausgeführt.

Aus den vorstehenden, den grundlegenden Ansatz der vorgeschlagenen Lösung aus der Sicht des Verfahrens darstellenden Erläuterungen wird sicher ohne weiteres erkennbar, dass dem Nutzer hierdurch eine Interaktion mit physischen, das heißt tatsächlich existierenden Objekten mithilfe virtueller Techniken in einer deutlich intuitiveren Art und Weise als bei den eingangs beschriebenen Lösungen des Standes der Technik ermöglicht wird. Es entspricht eben einer natürlicheren Vorgehensweise, im Zusammenhang mit dem Einsatz einer MR-Brille für die Interaktion mit einem physischen Objekt dessen virtuelles Pendant (das virtuelle Trigger-Objekt) durch Ausrichtung seines Blicks mit der MR-Brille anzuschauen oder auf dieses virtuelle Objekt zu zeigen, und sei es mittels eines ebenfalls nur virtuellen Laserpointers.

Die unterschiedlichen Möglichkeiten für den oder die sich an die Aktivierung des Trigger-Objekts anschließenden Verfahrensschritte beruhen auf der Unterschiedlichkeit möglicher physischer Objekte, mit welchen ein Nutzer unter Einsatz des Verfahrens in Interaktion treten kann und der damit zusammenhängenden Unterschiedlichkeit der von diesen Objekten jeweils unterstützten oder mit ihnen assoziierten Interaktionsfunktionen. Handelt es sich bei einem solchen physischen Objekt beispielsweise um eine Lampe, bei der die durch diese unterstützte Interaktionsfunktion in der Möglichkeit besteht, diese Lampe mithilfe des virtuellen Trigger-Objekts an- oder auszuschalten, so kann sich im Verfahrensablauf an die Aktivierung des entsprechenden Trigger-Objekts zum Beispiel als weiterer Verfahrensschritt die Alternative a) unmittelbar anschließen.

Gemäß dem Verfahren wird also bei der Aktivierung des mit diesem physischen Objekt, also der Lampe, verknüpften Trigger-Objekts ein Einschalten der Lampe bewirkt, sofern diese bis dahin ausgeschaltet war, oder umgekehrt, ein Ausschalten der bis zur Aktivierung des Trigger-Objekts sich im Einschaltzustand befindenden Lampe. Eine andere Möglichkeit bestünde darin, dass durch das Trigger-Objekt als Interaktionsfunktion eine mit einem Taster vergleichbare Funktion realisiert wird, gemäß welcher die Lampe nur so lange eingeschaltet bleibt, wie der Blick des die MR-Brille tragenden Nutzers oder der virtuelle Laserpointer auf das virtuelle Trigger-Objekt gerichtet ist.

Andererseits ist es natürlich denkbar, dass ein physisches Objekt in Form eines Kommunikationsgeräts, wie zum Beispiel eines Fernsehers, eine größere Zahl von Funktionen aufweist, die bei entsprechender Ausbildung dieses Kommunikationsgeräts - das heißt, das Kommunikationsgerät ist dazu ausgebildet, als Bestandteil in das später noch zu erläuternde System einbezogen zu werden - entsprechend dem vorgestellten Verfahren mithilfe eines virtuellen Trigger-Objekts ausgelöst, respektive zur Ausführung gebracht werden können. Das heißt, in diesem Falle wird das Verfahren nach der Aktivierung des virtuellen Trigger-Objekts, beispielsweise durch Ausrichten der Blickrichtung eines die MR-Brille tragendenden Nutzers auf das Trigger-Objekt, mit dem oben angegebenen Verfahrensschritt gemäß der Alternative c) fortgesetzt. Beispiele für die Ausführung des weiteren Verfahrens gemäß der Alternative b) im Anschluss an die Aktivierung eines entsprechenden virtuellen Trigger-Objekts oder aber auch im Anschluss an den Verfahrensschritt a) sollen später im Zusammenhang mit der Erläuterung eines Ausführungsbeispiels für das System gegeben werden.

Die zuvor beispielhaft angesprochenen Möglichkeiten für den Verfahrensablauf bezogen sich auf die unter Nutzung des vorgeschlagenen Verfahrens erfolgende Interaktion mit aktiven, das heißt steuerbaren physischen Objekten. Wie auch in dem Patentanspruch 1 zum Ausdruck gebracht, ermöglicht das Verfahren eine Interaktion mit mindestens einem physischen Objekt. Im Zusammenhang mit praxisrelevanten Implementierungen des Verfahrens kann und wird typischerweise mittels diesem eine Interaktion mit mehreren, sich in der Umgebung eines Nutzers befindenden physischen Objekten ermöglicht werden. In diesem Falle ist jedem dieser physischen Objekte jeweils ein an den Brillengläsern der von dem Nutzer getragenen MR-Brille visualisierbares virtuelles Trigger-Objekt zugeordnet.

Diese Zuordnung geschieht in dem schon früher angesprochenen Setup-Modus der von dem mobilen Endgerät des Nutzers (an dieser Stelle sei schon angedeutet, dass es sich bei dem betreffenden mobilen Endgerät gegebenenfalls auch um die entsprechend ausgestattete MR-Brille selbst handeln kann) ausgeführten Programmanwendung, wobei das einem physischen Objekt zugeordnete virtuelle Trigger-Objekts zumindest in diesem Modus an den Brillengläsern der MR-Brille sichtbar ist. Je nach der Anzahl der in ein zur Ausführung des Verfahrens geeignetes System einbezogenen, eine Interaktion durch Aktivierung eines mit ihnen gekoppelten virtuellen Trigger-Objekts ermöglichenden physischen Objekte kann es sich bei dem oder bei mindestens einem dieser physischen Objekte, wie bereits angesprochen, um ein steuerbares Objekt, nämlich um ein elektronisch steuerbares Gerät handeln. An ein solches steuerbares physisches Objekt werden in diesem Falle Steuersignale übertragen, welche die Ausführung der jeweiligen, in der Bedienung einer elektronischen Funktion des Geräts bestehenden Interaktionsfunktion bewirken.

Darüber hinaus ist es aber auch denkbar, dass es sich bei dem oder bei mindestens einem der physischen Objekte um ein (passives) Objekt handelt, bei welchem in Ausführung der jeweiligen Interaktionsfunktion für dieses physische Objekt an den Brillengläsern der MR-Brille Informationen visualisiert werden, mit denen das physische Objekt in dem System assoziiert wird. Hiervon ist auch die Möglichkeit umfasst, dass es sich bei den mit einem solchen passiven physischen Objekt assoziierten Informationen um Informationen handelt, welche durch das dafür entsprechend ausgebildete System in einer hinsichtlich ihres Inhalts jeweils aktualisierten Form über ein Weitverkehrsnetz, wie das Internet, von einer entfernten Informationsquelle bezogen werden.

Zu denken ist hierbei beispielsweise an Wetterinformationen, welche zum Beispiel in einer Smart Home Umgebung mit einem Fenster als passivem physischen Objekt assoziiert sind. Blickt der Nutzer mit seiner MR-Brille nun in Richtung des entsprechenden, mit diesem Fenster gekoppelten virtuellen Trigger-Objekts, so werden für ihn die neuesten Wetterinformationen an den Brillengläsern der MR-Brille visualisiert. Oder anders ausgedrückt, sofern das virtuelle Trigger-Objekt, wie bevorzugt, dem tatsächlich existierenden physischen Objekt Fenster als geometrische, im Setup-Modus der Programmanwendung semitransparente und im Anwendungsmodus vorzugsweise volltransparente (unsichtbare) geometrische Form überlagert und dort fixiert wird, so werden dem Nutzer, wenn er mit der MR-Brille aus dem entsprechenden Fenster schaut, aktuelle Wetterinformationen an der MR-Brille zur Ansicht gebracht.

Entsprechend einer möglichen Implementierung des Verfahrens kann dieses auch so gestaltet sein, dass das virtuelle Trigger-Objekt zur Ermöglichung einer Interaktion mit dem ihm im System zugeordneten physischen Objekt erst aktiviert wird, sofern der Blick des die MR-Brille tragenden Nutzers oder der virtuelle Laserpointer für eine Mindestdauer von 1 - 3 Sekunden auf dem virtuellen Trigger-Objekt verharrt. Dies hat den Vorteil, dass ungewollte Interaktionen mit einzelnen von gegebenenfalls mehreren physischen Objekten sicherer vermieden werden. Das Verfahren kann vorzugsweise weiterhin so ausgestaltet sein, dass das dem mindestens einen physischen Objekt zugeordnete virtuelle Trigger-Objekt an den Brillengläsern der MR-Brille als eine geometrische Form visualisiert wird, deren Aussehen und/oder Größe und/oder Position durch den Nutzer in dem schon erwähnten Setup-Modus der Programmanwendung variierbar ist. Das heißt, dem Nutzer ist es hierbei möglich, einem in das Verfahren einbezogenen physischen Objekt als virtuelles Trigger-Objekt eine geometrische Form zuzuordnen, durch welche für ihn das mit dem betreffenden virtuellen Trigger-Objekt verknüpfte physische Objekt unmissverständlich und sofort erkennbar ist. Der Nutzer kann hierbei zudem das in diesem Falle semitransparente Trigger-Objekt, respektive die dieses repräsentierende semitransparente geometrische Form, gewissermaßen auch auf das durch ihn durch die Brillengläser wahrgenommene physische Objekt legen und diese geometrische Form, zum Beispiel eine Box, - sofern gewünscht - in Form und Größe an das physische Objekt anpassen.

Vorzugsweise wird das Trigger-Objekt, respektive die vorgenannte, dieses symbolisierende geometrische Form durch eine entsprechende Bedienhandlung des Nutzers im Setup-Modus virtuell an dem mit ihm verknüpften physischen Objekt verankert, zum Beispiel durch Anschauen eines dies vorschlagenden, an der Brille visualisierten Menüpunktes oder Ausführen einer dafür festgelegten Geste. Das heißt, das virtuelle Trigger-Objekt "wandert" bei einer Änderung der Blickrichtung des die MR-Brille tragenden Nutzers - ob sichtbar, wie im Setup-Modus der Programmanwendung in jedem Falle, oder unsichtbar, weil volltransparent, wie je nach Implementierung des Verfahrens möglicherweise für den Anwendungsmodus der Programmanwendung vorgesehen - zusammen mit dem mit ihm verknüpften physischen Objekt über die Brillengläser der MR-Brille.

An dieser Stelle sollen einige Ausführungen zu der Frage der Visualisierung, respektive der Sichtbarkeit eines virtuellen Trigger-Objekts, das heißt der dieses repräsentierenden geometrischen Form, erfolgen, wobei dabei vereinfachend von einem Trigger-Objekt gesprochen wird, sich diese Aussagen aber ebenso auf gegebenenfalls weitere vorhandene, respektive zu dem noch zu erläuternden System gehörende Trigger-Objekte beziehen. Das virtuelle Trigger-Objekt ist im Setup-Modus der Programmanwendung in jedem Falle sichtbar, um dem Nutzer beispielsweise eine Änderung seines Erscheinungsbildes (Form, Größe und dergleichen) sowie eine Zuordnung zu einem physischen Objekt und vorzugsweise Verankerung an diesem physischen Objekt zu ermöglichen. Vorzugsweise ist das Trigger-Objekt hierbei, das heißt im Setup-Modus, semitransparent.

Im Anwendungsmodus der Programmanwendung kann das Trigger-Objekt ebenfalls an den Brillengläser der MR-Brille sichtbar sein - auch hierbei vorzugsweise semitransparent - oder aber unsichtbar, das heißt volltransparent. Im Hinblick auf die Aktivierung des Trigger-Objekt im Anwendungsmodus bedeutet letzteres (das Trigger-Objekt ist im Anwendungsmodus unsichtbar/volltransparent aber an dem physischen Objekt verankert), dass der die MR-Brille tragende Nutzer dazu im Grunde das virtuelle Trigger-Objekt anschaut oder auf dieses mit dem virtuellen Laserpointer zeigt, wobei er aber in seiner Wahrnehmung das physische anschaut oder auf dieses zeigt. Es wird insoweit erkennbar, dass eine Unsichtbarkeit/Volltransparenz des Trigger-Objekts im Anwendungsmodus im Grunde nur sinnvoll ist, wenn dieses an dem mit ihm verknüpften physischen Objekt verankert ist. Die vorstehend erläuterten Möglichkeiten sind im Übrigen auch der Grund dafür, dass im Patentanspruch 1 von einem an den Brillengläsern der MR-Brille "visualisierbaren" Trigger-Objekt gesprochen wird.

Das die Aufgabe lösende, zur Durchführung des zuvor beschriebenen Verfahrens geeignete System zur Interaktion eines Nutzers mit mindestens einem von ihm in seiner Umgebung visuell wahrnehmbaren physischen Objekt umfasst neben diesem mindestens einen, bei dem System registrierten physischen Objekt, eine von dem Nutzer getragene MR-Brille und ein mobiles computerbasiertes Endgerät des Nutzers. Dieses computerbasierte Endgerät ist mit einer von ihm verarbeiteten Programmanwendung zur Visualisierung eines der Interaktion mit dem mindestens einen physischen Objekt dienenden virtuellen Trigger-Objekts an den Brillengläsern der MR-Brille ausgestattet.

Die letztgenannte Programmanwendung ist dabei außerdem dazu ausgebildet, in einen Setup-Modus der Programmanwendung das mindestens eine physische Objekt mit dem, mit wenigstens einer Interaktionsfunktion unterlegten virtuellen Trigger-Objekt zu verknüpfen und das Trigger-Objekt in einem Anwendungsmodus der Programmanwendung zu aktivieren, wenn der die MR-Brille tragende Nutzer seine Blickrichtung oder einen an den Brillengläsern der MR-Brille visualisierten virtuellen Laserpointer auf dieses Trigger-Objekt ausrichtet.

Unter Einschluss dieser, durch das mobile Endgerät verarbeiteten Programmanwendung ist das System zudem softwaretechnisch dazu ausgestattet, auf eine Aktivierung des virtuellen Trigger-Objekts mit mindestens einer der nachfolgend genannten Aktionen zu reagieren, nämlich
a) mit der unmittelbaren Ausführung einer dem aktivierten Trigger-Objekt für das mindestens eine physische Objekt unterlegten Interaktionsfunktion,
b) mit der Ausführung einer dem aktivierten Trigger-Objekt für das mindestens eine physische Objekt unterlegten Interaktionsfunktion in Reaktion auf eine von der MR-Brille erfasste und durch die von dem mobilen Endgerät ausgeführte Programmanwendung interpretierte Geste des Nutzers,
c) mit der Visualisierung einer Liste mehrerer dem aktivierten Trigger-Objekt für das mindestens eine physische Objekt unterlegter Interaktionsfunktionen an den Brillengläsern der MR-Brille sowie der Ausführung einer vom Nutzer durch Ausrichten seiner Blickrichtung oder des virtuellen Laserpointers oder mittels einer von der MR-Brille erfassten sowie von der Programmanwendung interpretierten Geste, ausgewählten Interaktionsfunktion.

Wie bereits zum Verfahren angedeutet, kann die zum System gehörende, von einem Nutzer zu tragende MR-Brille gleichzeitig auch das die einen Setup-Modus und einen Anwendungsmodus aufweisende Programmanwendung ausführende mobile Endgerät ausbilden. Typischerweise wird es sich jedoch bei dem mobilen Endgerät um ein sogenanntes Companion-Gerät, wie etwa ein mit der MR-Brille, zum Beispiel über Bluetooth gekoppeltes Smartphone, handeln. Darüber hinaus kann das System aber auch noch einen Server - bezogen auf eine Ausbildung als Smart Home System, ein Smart Home Hub oder Smart Home Gateway - umfassen. In einem solchen Server oder Smart Home Hub werden in diesem Falle die hard- und softwaretechnischen Mittel zur Aussendung von Steuerbefehlen an ein ausgewähltes aktives physisches Objekt (steuerbares Objekt) entsprechend einer gewünschten Interaktionsfunktion angesiedelt sein.

In einer entsprechenden Systemkonfiguration werden in dem betreffenden Server (oder Smart Home Hub) außerdem die hard- und softwaretechnischen Mittel (beispielsweise eine Datenbank) angesiedelt sein, um für eine virtuell aktivierte Interaktion geeignete physische Objekte in dem System zu registrieren und darüber hinaus im Zuge einer über eine Schnittstelle erfolgenden Interaktion mit der von dem mobilen Endgerät verarbeiteten Programmanwendung in deren Setup-Modus an diese Programmanwendung mögliche, mit einem jeweiligen physischen Objekt verknüpfbare Trigger-Objekte und die diesen unterlegbaren Interaktionsfunktionen zur Visualisierung an den Brillengläsern der MR-Brille zu übergeben. An dieser Stelle sei jedoch darauf hingewiesen, dass gegebenenfalls auch die im Zusammenhang mit dem Server (dem Smart Home Hub) vorgenannten Funktionen bei entsprechender Ausstattung mit hochintegrierter Technik in der MR-Brille realisiert sein könnten, respektive von dieser ausführt werden könnten. Dies schließt gegebenenfalls sogar die Möglichkeit mit ein, dass die MR-Brille selbst eine Zugangsmöglichkeit zum Internet, beispielsweise in Form einer von dieser aufgenommenen eSIM (embedded Subscriber Identity Module) über einen Zugang zum Internet verfügt, welcher es der MR-Brille ermöglicht, über das Internet mit einem zum System gehörenden physischen Objekt assoziierte sowie aktualisierbare Informationen zu beziehen.

Unabhängig von einer eventuellen kompletten Integration in die MR-Brille oder einer Aufteilung auf mehrere Komponenten, nämlich auf MR-Brille, separates mobiles, mit der MR-Brille gekoppeltes Endgerät sowie separaten Server (Smart Home Hub), verfügt das System darüber hinaus vorzugsweise über einen Registriermodus, respektive Konfigurierungsmodus, welcher es dem Nutzer ermöglicht, neu in das System einzubeziehende, für eine virtuell aktivierte Interaktion ausgebildete physische Objekte bei dem System zu registrieren, das heißt, diese zum Beispiel in einer Datenbank abzuspeichern. Hierdurch werden diese physischen Objekte der von dem mobilen Endgerät verarbeiteten Programmanwendung zugänglich, durch welche ihnen in deren Setup-Modus eine mit ihnen zu verknüpfende geometrische Form mit mindestes einer dieser Form unterlegten Interaktionsfunktionen zugeordnet werden kann. Bei ihrer Registrierung kann den physischen Objekten gegebenenfalls eine Objektklasse zugewiesen werden, so dass dem Nutzer im Setup-Modus der Programmanwendung für ein jeweiliges physisches Objekt ein kontextsensitives Menü präsentiert wird, mittels welchem diesem Objekt dann, gefiltert, nur ausgewählte virtuelle Trigger-Objekte mit bestimmten diesen unterlegten Interaktionsfunktionen zugeordnet werden können.

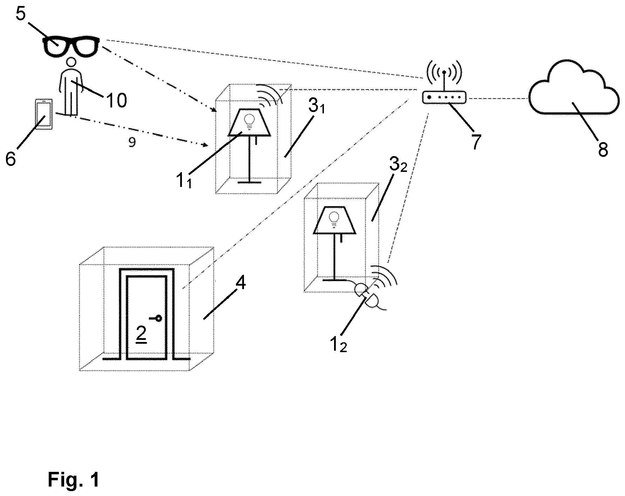

Anhand der Fig. 1 soll ein Ausführungsbeispiel der Erfindung gegeben und erläutert werden. Die Fig. 1 zeigt eine mögliche, einfache Ausbildungsform des erfindungsgemäßen Systems in einer stark schematisierten Darstellung, wobei im Zusammenhang mit den zu dieser Ausbildungsform nachfolgend gegebenen Ausführungen auch nochmals auf Aspekte des Verfahrens eingegangen werden soll.

Die beispielhafte, in der Fig. gezeigte Ausbildungsform des erfindungsgemäßen Systems umfasst mehrere physische Objekte 1₁, 1₂, 2, mit denen ein eine MR-Brille 5 tragender Nutzer 10 mittels ihnen jeweils zugeordneten virtuellen Trigger-Objekten 3₁, 3₂, 4 in Interaktion treten kann. Die von dem Nutzer 10 getragene MR-Brille 5 ist vorzugsweise über Bluetooth - darüber hinaus sind selbstverständlich andere, vorzugsweise drahtlose Verbindungstechniken denkbar - mit einem mobilen Endgerät 6 des Nutzers 10, beispielsweise einem Smartphone, als Companion-Gerät gekoppelt. Von dem mobilen Endgerät 6 wird eine Programmanwendung verarbeitet, welche es ermöglicht, den in das System einbezogenen physischen Objekten 1₁, 1₂, 2 in einem Setup-Modus die hier jeweils als ein Quader symbolisierten virtuellen Trigger-Objekte 3₁, 3₂, 4 zuzuordnen.

Zu dem System gehört ferner ein mit dem Internet verbundener Smart Home Hub 7, respektive ein Gateway, bei welchem die in das System einbezogenen physischen Objekte 1₁, 1₂, 2 zusammen mit den mit ihnen verknüpften, jeweils mit mindestens einer Interaktionsfunktion unterlegten virtuellen Trigger-Objekte 3₁, 3₂, 4 registriert sind. Der Setup-Modus, das heißt die Zuordnung der Trigger-Objekte 3₁, 3₂, 4 zu den physischen Objekten 1₁, 1₂, 2, gestaltet sich hierbei beispielsweise wie folgt. Der Nutzer 10 wählt aus den bei dem Smart Home Hub 7 registrierten physischen Objekte 1₁, 1₂, 2, für welche ihm eine Interaktion unter Nutzung eines virtuellen Trigger-Objekts ermöglicht werden kann, eines aus. Hierbei wird ihm die besagte Liste der physischen Objekte mittels des die sich im Setup-Modus befindende Programmanwendung verarbeitenden mobilen Endgeräts 6, welches diese Liste bei dem Smart Home Hub 7 abfordert, an den Brillengläsern der von ihm getragenen MR-Brille 5 visualisiert.

Nach der Auswahl des physischen Objekts 1₁, 1₂, 2, für welches der Nutzer 10 die Möglichkeit einer Interaktion unter Nutzung der erfindungsgemäßen Lösung, also des Verfahrens und des Systems, wünscht, wird dem Nutzer 10 an den Brillengläsern der MR-Brille 5 ein mit diesem physischen Objekt 1₁, 1₂, 2 verknüpfbares virtuelles Trigger-Objekt 1₁, 1₂, 2 angeboten, das heißt als eine geometrische Form dargestellt. Diese geometrische Form kann der Nutzer 10 gegebenenfalls in Form und Größe verändern und dann in einer sinnvollen räumlichen Zuordnung zu dem mit ihm zu verknüpfenden physischen Objekt 1₁, 1₂, 2 innerhalb seiner mit der MR-Brille 5 erfassbaren Umgebung positionieren und dort verankern. Vorzugsweise wird er dabei das semitransparente Trigger-Objekt 3₁, 3₂, 4 über das tatsächlich existierende physische Objekt 1₁, 1₂, 2 legen.

Entsprechendes macht er weiterhin im Setup-Modus der von dem mobilen Endgerät 6 verarbeiteten Programmanwendung, welche über eine geeignete Softwareschnittstelle und hinsichtlich des Übertragungsmediums vorzugsweise ebenfalls über Funk mit dem Smart Home Hub 7 und einer von diesem verarbeiteten Software zur Verwaltung der physischen Objekte 1₁, 1₂, 2, der mit diesen verbindbaren virtuellen Trigger-Objekte 3₁, 3₂, 4 und der letzteren unterlegten Interaktionsfunktionen verbunden ist, auch für die anderen, einer Interaktion über virtuelle Trigger-Elemente 3₁, 3₂, 4 zugänglichen physischen Objekte 1₁, 1₂, 2. Die zuvor beispielhaft beschriebene Verknüpfung eine physischen Objekts 1₁, 1₂, 2 mit einem virtuellen Trigger-Objekt 3₁, 3₂, 4 kann aber auch in umgekehrter Reihenfolge vonstattengehen. Das heißt der Nutzer wählt zunächst ein Trigger-Objekt 3₁, 3₂, 4 aus, gestaltet dieses gegebenenfalls (Form, Größe) und ordnet diesem dann ein mögliches, im System bereits registriertes physisches Objekt 1₁, 1₂, 2 zu.

Im Anwendungsmodus der von dem mobilen Endgerät 6 verarbeiteten Programmanwendung kann dann der die MR-Brille 5 tragende Nutzer 10 seinen Blick (oder einen virtuellen Laserpointer 9) auf eines der physischen Objekte 1₁, 1₂, 2 oder genauer gesagt auf eines der einem physischen Objekt 1₁, 1₂, 2 überlagerten virtuellen Trigger-Objekte 3₁, 3₂, 4 richten. Hierdurch aktiviert er das Trigger-Objekt 3₁, 3₂, 4 und kann damit beispielsweise unmittelbar den Schaltzustand einer Lampe (hier zum Beispiel physisches Objekt 1₂) ändern, das heißt diese einschalten, sofern sie bis dahin ausgeschaltet war, oder sie ausschalten, sofern sie bis dahin eingeschaltet war.

Bei einer anderen Lampe (hier zum Beispiel physisches Objekt 1₁) ist es dem Nutzer 10 durch Aktivierung des diesem physischen Objekt 1₁ an den Brillengläsern der MR-Brille 5 überlagerten Trigger-Objekts 3₁ möglich, diese Lampe zunächst einzuschalten und dann durch eine mit der MR-Brille 5 erfasste und von der Programmanwendung auf dem mobilen Endgerät 6 interpretierte Handgeste, beispielsweise des Auseinanderspreizens zweier Finger, deren Helligkeit zu erhöhen oder diese durch Zusammenführen der beiden Finger wieder zu dimmen. Bei einem dritten physischen Objekt 2 handelt es sich um eine Tür im Smart Home des Nutzers 10. Blickt er mit der MR-Brille 5 dieses physische Objekt 2, respektive das diesem im Anwendungsmodus der Programmanwendung in volltransparenter Darstellung, also nicht sichtbar, überlagerte virtuelle Trigger-Objekt 4, an, so wird ihm an deren Brillengläsern eine mit diesem physischen Objekt 2 assoziierte Information präsentiert. Hierbei kann es sich beispielsweise um den aktuellen Wetterbericht handeln, welcher aufgrund der Aktivierung des mit dem physischen Objekt 2 verknüpften virtuellen Trigger-Objekts 4 im Zusammenwirken der von dem mobilen Endgerät 6 verarbeiteten Anwendungssoftware mit einer Software auf dem Smart Home Hub 7 durch das Smart Home Hub 7 aus dem Internet 8 bezogen, an die Programmanwendung auf dem mobilen Endgerät 6 übergeben und von letzterer an den Brillengläsern der MR-Brille 5 visualisiert wird.

## Patentansprüche

1. Verfahren zur Interaktion eines Nutzers (10) mit mindestens einem von ihm in seiner Umgebung visuell wahrnehmbaren physischen Objekt (1₁, 1₂, 2) mithilfe einer durch ein mobiles computerbasiertes Endgerät (6) des Nutzers (10) verarbeiteten Programmanwendung und eines durch diese Programmanwendung an den Brillengläsern einer von dem Nutzer (10) getragenen MR-Brille (5) visualisierbaren virtuellen Trigger-Objektes (3₁, 3₂, 4), **dadurch gekennzeichnet, dass** die Interaktion mit dem mindestens einen, dazu in einem das mobile Endgerät (6) umfassenden System registrierten physischen Objekt (1₁, 1₂, 2) dem Nutzer (10) in einem Anwendungsmodus der Programmanwendung ermöglicht wird, indem er das in einem Setup-Modus der Programmanwendung mit dem mindestens einen physischen Objekt (1₁, 1₂, 2) verknüpfte, mit wenigstens einer Interaktionsfunktion unterlegte Trigger-Objekt (3₁, 3₂, 4) durch Ausrichten seiner Blickrichtung oder eines an den Brillengläsern der MR-Brille (5) visualisierten virtuellen Laserpointers (9) auf das Trigger-Objekt (3₁, 3₂, 4) aktiviert und dass sich daran mindestens einer der nachfolgenden Verfahrensschritte anschließt:
a.) eine dem aktivierten Trigger-Objekt (3₁, 3₂, 4) für das mindestens eine physische Objekt (1₁, 1₂, 2) unterlegte Interaktionsfunktion wird unmittelbar ausgeführt,
b.) eine dem aktivierten Trigger-Objekt (3₁, 3₂, 4) für das mindestens eine physische Objekt (1₁, 1₂, 2) unterlegte Interaktionsfunktion wird in Reaktion auf eine von der MR-Brille (5) erfasste sowie von der Programmanwendung interpretierte Geste des Nutzers (10) ausgeführt,
c.) an den Brillengläsern der MR-Brille (5) wird eine Liste mehrerer dem aktivierten Trigger-Objekt (3₁, 3₂, 4) für das mindestens eine physische Objekt (1₁, 1₂, 2) unterlegter Interaktionsfunktionen visualisiert, von denen eine, vom Nutzer (10) durch Ausrichten seiner Blickrichtung oder des virtuellen Laserpointers (9) oder durch eine von der MR-Brille (5) erfasste sowie von der Programmanwendung interpretierte Geste des Nutzers (10) ausgewählte Interaktionsfunktion ausgeführt wird.

2. Verfahren nach Anspruch 1, **dadurch gekennzeichnet, dass** es sich bei dem oder bei mindestens einem der physischen Objekte (1₁, 1₂, 2) um ein steuerbares Objekt (1₁, 1₂), nämlich um ein elektronisch steuerbares Gerät handelt, an welches die Ausführung der jeweiligen, in der Bedienung einer elektronischen Funktion des Geräts bestehenden Interaktionsfunktion bewirkende Steuersignale übertragen werden.

3. Verfahren nach Anspruch 1, **dadurch gekennzeichnet, dass** es sich bei dem oder bei mindestens einem der physischen Objekte (1₁, 1₂, 2) um ein Objekt (2) handelt, bei welchem in Ausführung der jeweiligen Interaktionsfunktion mit diesem physischen Objekt (2) an den Brillengläsern der MR-Brille (5) Informationen visualisiert werden, mit welchen dieses physische Objekt (2) in dem System assoziiert ist.

4. Verfahren nach Anspruch 3, **dadurch gekennzeichnet, dass** es sich bei den mit dem betreffenden physischen Objekt (2) assoziierten Information um Informationen handelt, welche durch das dafür ausgebildete System in einer hinsichtlich ihres Inhalt jeweils aktualisierten Form über ein Weitverkehrsnetz, wie das Internet (8), von einer entfernten Informationsquelle bezogen werden.

5. Verfahren nach einem der Ansprüche 1 bis 4, **dadurch gekennzeichnet, dass** das virtuelle Trigger-Objekt (3₁, 3₂, 4) zur Ermöglichung einer Interaktion mit dem ihm verknüpften physischen Objekt (1₁, 1₂, 2) aktiviert wird, sofern der Blick des die MR-Brille (5) tragenden Nutzers (10) oder der virtuelle Laserpointer (9) für eine Mindestdauer von 1 bis 3 Sekunden auf dem Trigger-Objekt (3₁, 3₂, 4) verharrt.

6. Verfahren nach einem der Ansprüche 1 bis 5, **dadurch gekennzeichnet, dass** das mit dem mindestens einen physischen Objekt (1₁, 1₂, 2) verknüpfte virtuelle Trigger-Objekt (3₁, 3₂, 4) an den Brillengläsern der MR-Brille (5) als eine geometrische Form visualisiert wird, deren Aussehen und/oder Größe und/oder Position durch den Nutzer (10) in dem Setup-Modus der Programmanwendung variierbar ist.

7. Verfahren nach einem der Ansprüche 1 bis 6, **dadurch gekennzeichnet, dass** das mit dem mindestens einen physischen Objekt (1₁, 1₂, 2) verknüpfte virtuelle Trigger-Objekt (3₁, 3₂, 4) an den Brillengläsern der MR-Brille (5) als eine semitransparente geometrische Form dargestellt wird.

8. Verfahren nach einem der Ansprüche 1 bis 6, **dadurch gekennzeichnet, dass** das mit dem mindestens einen physischen Objekt (1₁, 1₂, 2) verknüpfte virtuelle Trigger-Objekt (3₁, 3₂, 4) an den Brillengläsern der MR-Brille (5) im Setup-Modus der Programmanwendung als eine semitransparente geometrische Form dargestellt und über dem mit dem Trigger-Objekt (3₁, 3₂, 4) verknüpften physischen Objekt (1₁, 1₂, 2) positioniert sowie an diesem verankert wird, wohingegen diese geometrische Form im Anwendungsmodus der Programmanwendung vollständig transparent, das heißt für den Träger der MR-Brille visuell nicht wahrnehmbar, aber das Trigger-Objekt (3₁, 3₂, 4) weiterhin an dem zugehörigen physischen Objekt verankert ist.

9. System zur Interaktion eines Nutzers (10) mit mindestens einem von ihm in seiner Umgebung visuell wahrnehmbaren physischen Objekt (1₁, 1₂, 2), mindestens umfassend das mindestens eine bei dem System registrierte physische Objekt (1₁, 1₂, 2), eine von dem Nutzer (10) getragene MR-Brille (5) und ein mobiles computerbasiertes Endgerät (6) des Nutzers (10), welches ausgestattet ist mit einer von ihm verarbeitbaren Programmanwendung zur Visualisierung eines der Interaktion mit dem mindestens einen physischen Objekt (1₁, 1₂, 2) dienenden virtuellen Trigger-Objektes (3₁, 3₂, 4) an den Brillengläsern der MR-Brille (5), **dadurch gekennzeichnet, dass** die Programmanwendung, mit welcher das mobile computerbasierte Endgerät (6) ausgestattet ist, dazu ausgebildet ist, in einem Setup-Modus der Programmanwendung das mindestens eine physische Objekt (1₁, 1₂, 2) mit dem, mit wenigstens einer Interaktionsfunktion unterlegten virtuellen Trigger-Objekt (3₁, 3₂, 4) zu verknüpfen und das Trigger-Objekt (3₁, 3₂, 4) in einem Anwendungsmodus der Programmanwendung zu aktivieren, wenn der die MR-Brille (5) tragende Nutzer (10) seine Blickrichtung oder einen an den Brillengläsern der MR-Brille (5) visualisierten virtuellen Laserpointer (9) auf dieses Trigger-Objekt (3₁, 3₂, 4) ausrichtet und dass das System unter Einschluss der durch das mobile Endgerät (6) verarbeiteten Programmanwendung softwaretechnisch dazu ausgestattet ist, auf die Aktivierung des virtuellen Trigger-Objekts (3₁, 3₂, 4) mit mindestens einer der nachfolgend genannten Aktionen zu reagieren, nämlich
a.) mit der unmittelbaren Ausführung einer dem aktivierten Trigger-Objekt (3₁, 3₂, 4) für das mindestens eine physische Objekt (1₁, 1₂, 2) unterlegten Interaktionsfunktion,
b.) mit der Ausführung einer dem aktivierten Trigger-Objekt (3₁, 3₂, 4) für das mindestens eine physische Objekt (1₁, 1₂, 2) unterlegten Interaktionsfunktion in Reaktion auf eine von der MR-Brille (5) erfasste und durch die von dem mobilen Endgerät (6) ausgeführte Programmanwendung interpretierte Geste des Nutzers (10),
c.) mit der Visulisierung einer Liste mehrerer dem aktivierten Trigger-Objekt (3₁, 3₂, 4) für das mindestens eine physische Objekt (1₁, 1₂, 2) unterlegter Interaktionsfunktionen an den Brillengläsern der MR-Brille (5) und der Ausführung einer vom Nutzer (10), durch Ausrichten seiner Blickrichtung oder des virtuellen Laserpointers (9) oder mittels einer von der MR-Brille (5) erfassten sowie von der Programmanwendung interpretierten Geste, ausgewählten Interaktionsfunktion.

10. System nach Anspruch 9, **dadurch gekennzeichnet, dass** das System aktiv steuerbare physische Objekte (1₁, 1₂) umfasst, welche mit der MR-Brille (5) und dem mobilen computerbasierten Endgerät (6) in einem lokalen Netzwerk vernetzt sind.

11. System nach Anspruch 9 oder 10, **dadurch gekennzeichnet, dass** das System einen als ein Smart Home Hub fungierenden Server (7) umfasst, der mit der MR-Brille (5) und dem mobilen computerbasierten Endgerät (6) in einem lokalen Netzwerk vernetzt ist und die wenigstens eine, einem aktivierten virtuellen Trigger-Objekt (3₁, 3₂, 4) unterlegte Interaktionsfunktion ausführt oder ein aktives physische Objekte (1₁, 1₂) zu deren Ausführung ansteuert.

12. System nach einem der Ansprüche 9 bis 11, **dadurch gekennzeichnet, dass** das System mit dem Internet (8) verbunden ist.
